Europäisches Patentamt

European Patent Office

Office européen des brevets

(11) Publication number : **0 467 324 B1**

# (12) EUROPEAN PATENT SPECIFICATION

(45) Date of publication of patent specification :
**27.09.95 Bulletin 95/39**

(51) Int. Cl.⁶ : **G02B 3/04,** G02B 13/18,
G11B 7/12, G02B 13/24

(21) Application number : **91111936.0**

(22) Date of filing : **17.07.91**

(54) Lens for an optical disc recording and/or reproducing apparatus.

(30) Priority : **19.07.90 JP 191149/90**

(43) Date of publication of application :
**22.01.92 Bulletin 92/04**

(45) Publication of the grant of the patent :
**27.09.95 Bulletin 95/39**

(84) Designated Contracting States :
**DE FR GB**

(56) References cited :
**US-A- 4 743 093
US-A- 4 932 763
US-A- 5 004 330
US-A- 5 015 078**

(73) Proprietor : **SONY CORPORATION
7-35, Kitashinagawa 6-chome
Shinagawa-ku
Tokyo (JP)**

(72) Inventor : **Kubota, Shigeo, c/o Sony
Corporation
7-35, Kitashinagawa 6-chome
Shinagawa-ku, Tokyo (JP)**

(74) Representative : **Körber, Wolfhart, Dr.rer.nat.
et al
Patentanwälte Mitscherlich & Partner
Postfach 33 06 09
D-80066 München (DE)**

## Description

### Field of the Invention

The present invention generally relates to a single focusing (condenser) lens and more particularly to a single focusing lens for an optical disc recording and/or reproducing apparatus.

### Description of the Prior Art

It has previously been known that a single focusing lens for a high density recording optical disc recording and/or reproducing apparatus is required to be a lens wherein both spherical aberration and coma aberration are satisfactorily corrected, that is, an aplanatic lens.

In case of constituting this focusing lens by a single lens (glass molded lens), both surfaces thereof are made to be aspherical surfaces. But, in this case, there arises coma aberration due to shift of an optical axis (decentration) between these two aspherical surfaces so that the focusing lens must be designed so as to make a sensitivity of the decentering error as small as possible.

However, such a single focusing lens becomes large in sensitivity for the decentering error as its numerical aperture becomes a large value of about 0.6, so that it has been impossible to practically provide the single focusing lens having a large numerical aperture and a small sensitivity for the decentering error.

US-A-4,743,093 discloses a lens suitable for an optical disc reproducing apparatus.
This lens has two aspherical surfaces. "Surface 1" has D= -0.002909441 and "Surface 2" has K= -20.4938239. This lens has a focal length of 4.6 mm (calculated for 800 nm with the data found in column 1, lines 46-65 of this document), a lens thickness of 3.386 mm and a disc thickness of 1.2 mm.

Furthermore US-A-4,932,763 describes an asperical single lens for use of an optical card. In the embodiments the focal length of the aspherical lens is 4.6 mm and the NA is 0.42, 0.47, 0.50.

### OBJECTS AND SUMMARY OF THE INVENTION

Accordingly, it is a general object of the present invention to provide an improved single condenser lens for a high density recording optical disc recording and/or reproducing apparatus in which the aforementioned shortcomings and disadvantages of the prior art can be eliminated.

More specifically, it is an object of the present invention to provide an improved single focusing lens for a high density recording optical disc recording and/or reproducing apparatus in which both surfaces of the lens are aspherical surfaces and the lens has not only a large numerical aperture but also aplanatic property and a minimum sensitivity for the decentering error.

According to an aspect of the present invention, there is provided a single focusing lens for an optical disc recording and/or reproducing apparatus, as described in claim 1.

The above and other objects, features, and advantages of the present invention will become apparent from the following detailed description of an illustrative embodiment thereof to be read in conjunction with the accompanying drawings.

### BRIEF DESCRIPTION OF THE DRAWINGS

FIG. 1 is a cross-sectional view illustrating an embodiment of a single focusing lens for an optical disc recording and/or reproducing apparatus according to the present invention;
FIG. 2 is a diagram illustrating characteristics of the single focusing lens; and
FIGS. 3A through 3D are respectively diagrams illustrating aberration charactristics of the single focusing lens shown in FIG. 1.

### DETAILED DESCRIPTION OF THE PREFERRED EMBODIMENT

A preferred embodiment of the present invention will now be described with reference to the accompanying drawings.

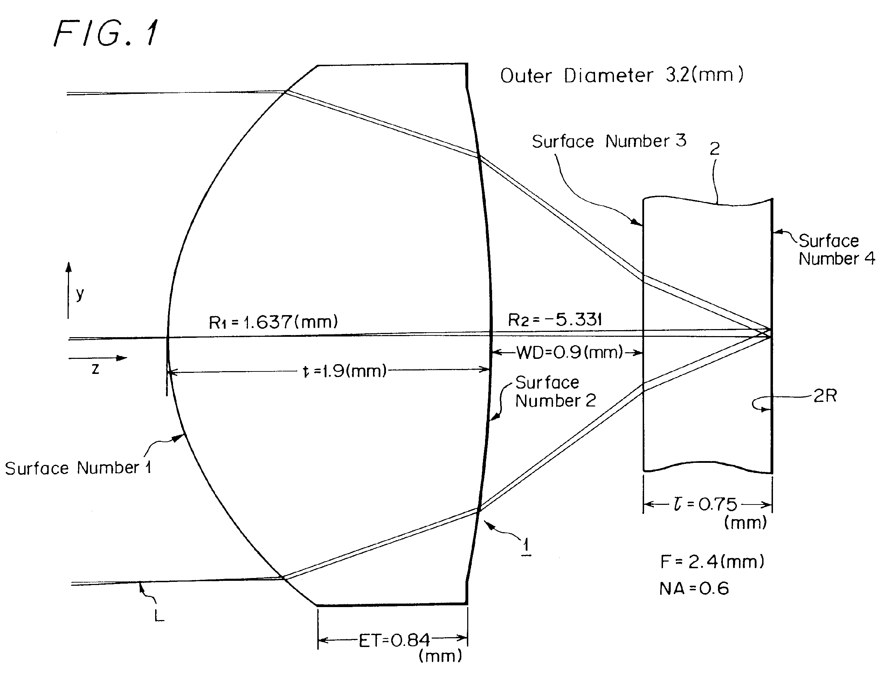

FIG. 1 is a diagram illustrating a preferred embodiment of a single focusing lens 1 according to the present invention and an optical disc substrate 2 opposing to the condenser lens 1.

Referring now to FIG. 1, the single condenser lens 1 which is a glass molded aspherical surface lens is disposed in an opposing relation to the optical disc substrate 2. The optical disc substrate 2 is made of polycarbonate and has a recording surface 2R on its surface opposite to the surface facing the lens 1. When plane parallel beam L is incident on the condenser lens 1, the converging beam L is emitted from the lens 1 and incident on the optical disc substrate 2 disposed with a suitable distance from the focusing lens 1 to be focused on the recording surface 2R of the disc 2.

Explanation will be made of a method of designing such single focusing lens 1.

The optical disc substrate 2 through which the beam L emitted from the focusing lens 1 passes constitutes a part of an imagining optical system. Thus, even in the conventional designing of an aspherical lens for a pickup of the optical disc recording and/or reproducing apparatus, it has been made to take over-corrected spherical aberration, generated when the converging beam passes through the optical disc substrate, into consideration in case of designing the fucusing lens.

In this case, adjustment of a thickness of the optical disc substrate 2 is positively taken into consideration in the design of an aspherical focusing lens, with a large numerical aperture for use in a high density recording optical disc recording and/or reproducing apparatus, which has aplanatic property and a minimum sensitivity for the decentering error.

The aplanatic condition, i.e. a condition for satisfying the aplanatism, and the sensitivity for the decentering error will be shown in a range of the primary aberration as follow.

1) The aplanatic condition will be represented as follow.

$$SC = SC1 + SC2 + SC3 + SC4$$
$$= SCs1 + SCa1 + SCs2 + SCa2 + SC3 + SC4 \quad (1)$$
$$CC = CC1 + CC2 + CC3 + CC4$$
$$= CCs1 + CCs2 + CCa2 + CC3 + CC4 \quad (2)$$
$$CCs\mu / SCs\mu = \underline{i}\mu / i\mu \quad (3)$$
$$CCa\mu / SCa\mu = \underline{Y}\mu / Y\mu \quad (4)$$

where $\mu = 1, 2$ represents a surface number of the aspherical lens 1, $\mu = 3, 4$ represents a surface number of the optical disc substrate 2, SC and CC represent sum of the spherical aberration and the coma aberration, respectively, $SC\mu$ and $CC\mu$ represent contribution components of the SC and CC of the surface having the surface number $\mu$ respectively, $SCs\mu$ and $CCs\mu$ represent contribution components of the $SC\mu$ and $CC\mu$ by the spherical surface respectively, and $SCa\mu$ and $CCa\mu$ represent contribution components of the $SC\mu$ and $CC\mu$ by the aspherical surface respectively. Further, $i\mu$ and $\underline{i}\mu$ represent slope angles of the surface having the surface number $\mu$ of paraxial rays and principal rays respectively, and $Y\mu$ and $\underline{Y}\mu$ represent ray heights on the plane having the surface number $\mu$ of paraxial rays and principal rays respectively.

2) The sensitivity for the decentering error will be represented as follow.

$$S1 = 1/3\alpha1'(CC - CC1) + \alpha1'SC1 \quad (5)$$
$$S2 = -1/3\alpha1'(CC - CC1) + \underline{\alpha1'}(SC - SC1) \quad (6)$$

where $\alpha\mu$ and $\underline{\alpha}\mu$ are set to be $ni\mu$ and $n\underline{i}\mu$ respectively. Thus, following formula can be obtained

$$S1 + S2 = \underline{\alpha1'}SC \quad (7)$$

Now, in the aplanatic lens, SC will be $SC \simeq 0$ since the spherical aberration can be corrected preferably. Thus, $S1 + S2 \simeq 0$ will be satisfied, so that if $S1 \simeq 0$ is satisfied, $S2$ $S2 \simeq 0$ is established at the same time. Accordingly, it is merely required to investigate whether solutions (SC1, SC2) satisfying $S1 \simeq 0$ satisfy that $SC \simeq 0$ and $CC \simeq 0$ in the remaining formulas (1) and (2) of the aplanatic condition or not.

Incidentally, it has been reported that, when a numerical aperture (NA) of a lens is small, practical solutions already exist as to an optical disc with a pregiven thickness. However, when a numerical aperture of a lens is large, both an off-axis aberration and an decentering aberration become large and so these solutions are not practically sufficient. Thus, a thickness of the optical disc substrate 2 is changed under a condition that a focal length of a lens is constant to change (SC3 + SC4) and (CC3 + CC4) of the right sides of equations (1) and (2), whereby a solution which satisfies $S1 \simeq 0$ in the formula (5) of the minimum condition of the sensitivity for the decentering error and also satisfies the aplanatic condition more strictly is obtained as described bellow.

As shown in FIG. 1, a thickness of the center portion of the lens 1, which both surfaces are aspherical and having a focal length of f = 2.4 (mm) and a numerical aperture NA = 0.6, is varied to thereby optimized within a range of 0.3 ~ 0.9 mm of a thickness $\tau$ of the optical disc substrate 2, whereby it is found that around the disc thickness $\tau$ = 0.75mm there is an optimum lens thickness, that is, a lens center thickness t, at which both an off-axis aberration (image height 42 $\mu$m) and decentering aberration (decentering 50 $\mu$m) become small. In practice, it is found that both aberration become minimum when the lens center thickness is t = 1.9 mm. Now, in this case the focal length is fixed but it is not essential.

Accordingly, it will be understood that, in order to obtain a solution satisfying both the minimum condition of the sensitivity for 1 the decentering error and the aplanatic condition, a disc thickness $\tau$ normalized by a focal length f, that is, $\tau/f$, is in a following range.

$$0.25 < \tau/f < 0.35 \quad (8)$$

Now, a range of an inequality is generally a function of a numerical aperture NA but the inequality (8) is considered to be effective when the NA is about 0.6.

An example of specification of thus optimized lens will be shown bellow.

```
wave length of a laser light:    λ = 780 (nm)

focal length:                    f = 2.4 (mm)

numerical aperture:              NA = 0.6

radius of curvature of approximated ellipsoid¹ of

revolution:                      .

                                 R1 = 1.6477545 (mm)

    .   thickness of center portion:    CT = 1.9 (mm)

thickness of peripheral portion: ET = 0.84 (mm)

refractive index of the lens:    Ng = 1.582509

radius of curvature of approximated hyperboloid² of

revolution:                      R2 = -5.3091039 (mm)

working distance between the lens and disc substrate:

                                 WD = 0.903175 (mm)

refractive index of the disc  substrate (polycarbonate):

                                 Nd = 1.57

thickness of the disc substrate: τ = 0.75 (mm)
```

When a formula of an aspherical surface is defined as follow,
$$z = cy^2/[1 + \{1 - (1 + K)c^2y^2\}^{1/2}] + Ay^4 + By^6 + Cy^8 + Dy^{10}, \quad c = 1/r$$
1) respective coefficients in the approximated ellipsoid[1] of revolution will be listed bellow.
$K = -0.279372$ (K : conic constant)
$A = -0.75198e{-}2$ $(mm^{-4})$
$B = -0.313881e{-}2$ $(mm^{-6})$
$C = +0.452206e{-}3$ $(mm^{-8})$
$D = -0.434638e{-}3$ $(mm^{-10})$
2) respective coefficients in the approximated hyperboloid[2] of revolution will be as follow.
$K = -23.231301$
$A = 0.706198e{-}2$ $(mm^{-4})$
$B = -0.186959e{-}2$ $(mm^{-6})$
$C = -0.111016e{-}3$ $(mm^{-8})$
$D = 0.6295059e{-}3$ $(mm^{-10})$
The efficiency of the lens thus formed under the specification will be as follow
aberration of wave surface on axis:      0.002 rms $\lambda$
aberration of wave surface out of axis:      0.03 rms $\lambda$ (image height 42 $\mu$m)
decentering aberration:      0.017 rms $\lambda$ (decentering 50 $\mu$m)
Thus, the lens is quite preferable in efficiency of both the aberrations of wave surface on and off axis and so sufficient for being called as a lens with complete aplanatic property, and further the sensitivity for the decentering error thereof is sufficiently suppressed.

If the above-described third-order aberration and third-order sensitivity for the decentering error are introduced, target solutions thereof are obtained as listed bellow.

|  | $\mu = 1$ | $\mu = 2$ | $\mu = 3,4$ | sum |
|---|---|---|---|---|
| $SCs\mu$ | -0.186295 | -0.156651 | 0.030662 | |
| $SCa\mu$ | 0.0255905 | 0.048499 | 0. | |
| $SC\mu$ | 0.06961 | -0.108152 | 0.030662 | -0.00788 |
| $CCs\mu$ | -0.011163 | 0.006966 | -0.002323 | |
| $CCa\mu$ | 0. | 0.003679 | 0. | |
| $CC\mu$ | -0.011163 | 0.020645 | -0.002323 | -0.002841 |
| $\alpha\mu$ | 0. | -0.5090647 | -0.6 | |
| $\underline{\alpha}\mu$ | 0.017455 | 0.017455 | | |
| $s\mu$ | 0.001215 | -0.001352 | (unit: mm) | |

Now, since values of $\tau$ and f are 0.75 and 2.4 respectively, $\tau/f$ will be 0.3125.

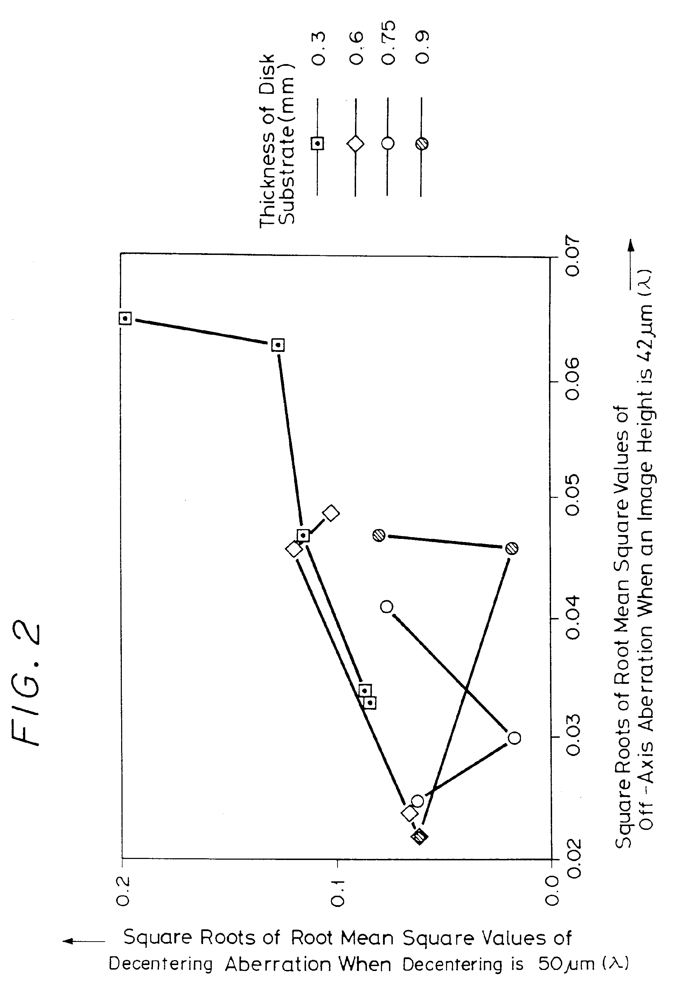

FIG. 2 is a characteristic diagram, wherein ordinate represents square roots of root mean square values of decentering aberration when decentering is 50 $\mu$m, while abscissa represents square roots of root mean square values of off-axis aberration when an image height is 42 $\mu$m, for respective values 0.3 mm, 0.6 mm, 0.75 mm and 0.9 mm of the thickness of the disc substrate 2. In this case, the best value is obtained when the thickness of the disc substrate 2 is 0.75 mm and the second best value is obtained which the thickness is 0.6 mm.

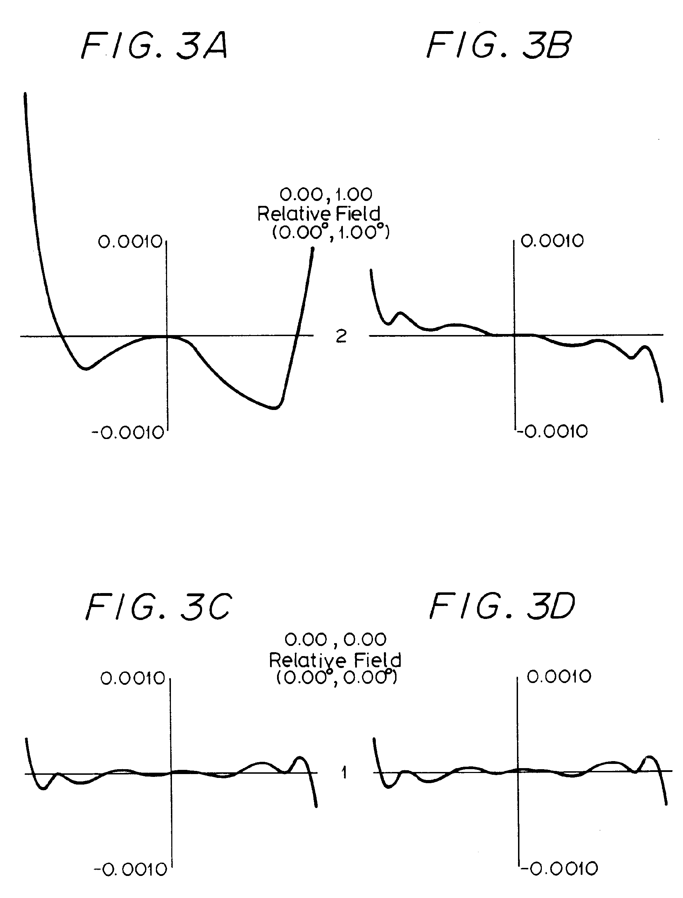

FIGS. 3A to 3D are aberration diagrams of the focusinglens 1 with a focal length f = 2.4 (mm), numerical aperture NA = 0.6 and working distance WD = 0.9 (mm), wherein abscissa of each of FIGS. 3A to 3D represents a relative entrance pupil radius and ordinates of FIGS. 3A to 3D represent a component within a tangential plane of the off-axis transversal aberration, a component within a sagittal surface of the off-axis transversal aberration, a component within a tangential plane of the transversal aberration on the axis, and a component within a sagittal surface of the transversal aberration on the axis, respectively.

As described above, according to the present invention, in a single condenser lens for use with a high density recording optical disc recording and/or reproducing apparatus whose both surfaces are aspherical surfaces and which has a large numerical aperture, a focal length and a thickness of the single condenser lens are set to satisfy the following formula

$$0.25 < \tau / f < 0.35$$

where f and $\tau$ represent the focal length of the single condenser lens and the thickness of the optical disc substrate, respectively. Thus, the single focusing lens thus designed can satisfy both the aplanatic property and a condition required for a minimum sensitivity for the decentering error.

## Claims

1.  A single focusing lens for an optical disc recording and/or reproducing apparatus, wherein the lens (1) has aspherical surfaces at its both surfaces and has a large numerical aperture, having the following parameters for the first surface;
    K = -0.279372 where K is the conic constant
    A = -0.75198e-2 mm$^{-4}$
    B = -0.313881e-2 mm$^{-6}$

$C = +0.452206\text{e-}3 \text{ mm}^{-8}$

$D = -0.434638\text{e-}3 \text{ mm}^{-10}$

and the following parameters for the second surface:

$K = -23.231301$ where K is the conic constant

$A = 0.706198\text{e-}2 \text{ mm}^{-4}$

$B = -0.186959\text{e-}2 \text{ mm}^{-6}$

$C = -0.111016\text{e-}3 \text{ mm}^{-8}$

$D = 0.6295059\text{e-}3 \text{ mm}^{-10}$

wherein the lens thickness near its optical axis is selected to be t = 1.9 mm, the refractive index of the lens relative to wavelength of 780 nm is n = 1.582509 and the formula of the aspherical surfaces is defined as

$$z = cy^2/[1 + \{1 - (1 + K) c^2y^2\}^{1/2}] + Ay^4 + By^6 + Cy^8 + Dy^{10}, \quad c = 1/r$$

2. A single focusing lens for an optical disc recording and/or reproducing apparatus according to claim 1, wherein a numerical aperture (NA) of said single focusing lens (1) is selected to be approximately 0.6.


**Patentansprüche**

1. Einzel-Fokussierlinse für ein Aufzeichnungs- und/oder Wiedergabegerät für optische Platten, wobei beide Oberflächen der Linse (1) asphärisch sind und die Linse (1) große numerische Apertur hat, mit den folgenden Parametern für die erste Oberfläche:

$K = -0{,}279372$; wobei K die Konizitäts-Konstante ist,

$A = -0{,}75198\text{e-}2 \text{ mm}^{-4}$

$B = -0{,}313881\text{e-}2 \text{ mm}^{-6}$

$C = +0{,}452206\text{e-}3 \text{ mm}^{-8}$

$D = -0{,}434638\text{e-}3 \text{ mm}^{-10}$

und den folgenden Parametern für die zweite Oberfläche:

$K = -23{,}231301$; wobei K die Konizitäts-Konstante ist,

$A = 0{,}706198\text{e-}2 \text{ mm}^{-4}$

$B = -0{,}186959\text{e-}2 \text{ mm}^{-6}$

$C = -0{,}111016\text{e-}3 \text{ mm}^{-8}$

$D = 0{,}6295059\text{e-}3 \text{ mm}^{-10}$,

wobei die Dicke der Linse in der Nähe ihrer optischen Achse zu t = 1,9 mm gewählt ist, der Brechungsindex der Linse bezüglich einer Wellenlänge von 780 nm n = 1,582509 ist, und die Gleichung für die asphärische Oberflächen gegeben ist durch

$$z = cy^2/[1 + \{1 - (1 + K) c^2y^2\}^{1/2}] + Ay^4 + By^6 + Cy^8 + Dy^{10}, \quad c = 1/r.$$

2. Einzel-Fokussierlinse für ein Aufzeichnungs- und/oder Wiedergabegerät für optische Platten gemäß Anspruch 1,
**dadurch gekennzeichnet**,
daß die numerische Apertur (NA) der Einzel-Fokussierlinse (1) zu ungefähr 0,6 gewählt ist.


**Revendications**

1. Lentille de focalisation unique pour un appareil d'enregistrement et/ou de reproduction utilisant un disque optique, dans laquelle la lentille (1) a des surfaces asphériques sur ses deux surfaces et a une grande ouverture numérique, ayant les paramètres suivants pour la première surface .

$K = -0{,}279372$ où K est la constante conique

$A = -0{,}75198\text{e-}2 \text{ mm}^{-4}$

$B = -0{,}313881\text{e-}2 \text{ mm}^{-6}$

$C = +0{,}452206\text{e-}3 \text{ mm}^{-8}$

$D = -0{,}434638\text{e-}3 \text{ mm}^{-10}$

et les paramètres suivants pour la seconde surface :

$K = -23{,}231301$ où K est la constante conique

$A = 0{,}706198\text{e-}2 \text{ mm}^{-4}$

$B = -0{,}186959\text{e-}2 \text{ mm}^{-6}$

$C = -0,111016e\text{-}3 \text{ mm}^{-8}$

$D = 0,6295059e\text{-}3 \text{ mm}^{-10}$

dans laquelle l'épaisseur de la lentille proche de son axe optique est sélectionnée de sorte que t = 1,9 mm, l'indice de réfraction de la lentille par rapport à la longueur d'onde de 780 nm est n = 1,582509 et la formule des surfaces asphériques est définie par

$$z = cy^2 / [1 + \{1 - (1 + K) c^2 y^2\}^{1/2}] + Ay^4 + By^6 + Cy^8 + Dy^{10}, \quad c = 1/r$$

2. Lentille de focalisation unique pour un appareil d'enregistrement et/ou de reproduction utilisant un disque optique selon la revendication 1, dans laquelle une ouverture numérique (NA) de ladite lentille de focalisation unique (1) est sélectionnée de façon à être approximativement de 0,6.

FIG.1

Outer Diameter 3.2(mm)

Surface Number 3

2

$R_1 = 1.637$(mm)

$R_2 = -5.331$

Surface Number 4

WD=0.9(mm)

$t = 1.9$(mm)

Surface Number 2

2R

Surface Number 1

L

1

$l = 0.75$ (mm)

ET=0.84 (mm)

F = 2.4(mm)

NA = 0.6

EP 0 467 324 B1

# FIG. 2

# FIG. 3A

0.00, 1.00
Relative Field
(0.00°, 1.00°)

2

# FIG. 3B

# FIG. 3C

0.00, 0.00
Relative Field
(0.00°, 0.00°)

1

# FIG. 3D